# EUROPEAN PATENT SPECIFICATION

(11) **EP 3 945 222 B1**
(45) Date of publication and mention of the grant of the patent: **25.11.2026**
(21) Application number: 21184082.2
(22) Date of filing: 06.07.2021
(51) Int. Cl.: F16B 5/06, F16B 5/12, F16B 21/07, F16B 35/06

(54) **FASTENER AND HOUSING DEVICE INCLUDING THE FASTENER**
BEFESTIGUNGSVORRICHTUNG UND GEHÄUSEVORRICHTUNG MIT DER BEFESTIGUNGSVORRICHTUNG
DISPOSITIF DE FIXATION ET BOÎTIER LE COMPRENANT

(30) Priority: 30.07.2020 TW 109125709
(43) Date of publication of application: 02.02.2022
(73) Proprietor: Pegatron Corporation, Taipei City 112 (TW)
(72) Inventor: CHEN, Jian-Hua, 112 Taipei City (TW); SHIH, Po-Tsung, 112 Taipei City (TW); LIN, Yu-Wei, 112 Taipei City (TW); HO, Ming-Hua, 112 Taipei City (TW); WU, Chih-Hao, 112 Taipei City (TW)
(74) Representative: Zimmermann, Tankred Klaus

(56) References cited:
- DE-A1- 102013 008 503
- FR-A1- 3 003 910
- US-B2- 8 322 001

## Description

### BACKGROUND OF THE INVENTION

### Field of Invention

The present disclosure relates to a fastener, and in particular, to a fastener with self-aligning positioning for assembling two housings and a housing device including the fastener.

### Related Art

A fastener is usually configured to assemble two housings. A common practice is to dispose a hook at a predetermined position on a first housing and dispose a slot at a corresponding position on a second housing. During assembling of the first housing and the second housing, an operator first aligns the hook to the slot, and then applies a slight force to hook the hook to the slot, thereby assembling the first housing and the second housing. The hook and the slot may each be a part of the first housing and the second housing, or may be respectively locked to the predetermined positions on the first housing and the second housing.

Sometimes sizes of the first housing and the second housing may change due to a rise or a drop in temperatures, for example. In this case, the hook or the slot may deviate from respective original predetermined relative positions, causing a failure in alignment during the assembling. As a result, poor assembling quality of the housings or even damage to the housings is caused.

Document US 8 322 001 B2 relates to a fastener for fastening an attached part or trim part to a support part, in particular a body part of a motor vehicle, with a receptacle part that has a pocket with a lateral opening and a guide slot, and with a connecting part that has at least one flange that can be introduced into the pocket through the lateral opening.

DE 10 2005 001 424 A1 discloses fastener, especially to secure a lower floor plate to the vehicle bodywork, that has a clamp with an outer flange and a drilling. A separate counter piece is fitted to the clamp, to hold the plate between it and the clamp flange with a section of the clamp gripping through a hole in the plate. The clamp drilling has two inner sprung tongues at the drilling wall, to engage an inserted holding pin at the bodywork in a ratchet lock. DE 10 2005 001 424 A1 discloses a shoulder formed on the bore wall of the annular counterpart, the shoulder being engageable behind the end of the clamping element.

### SUMMARY OF THE INVENTION

The invention is set out in the appended set of claims.

The present disclosure provides a fastener with the technical features of claim 1. The fastener is adapted for assembling a first housing and a second housing. The first housing is provided with a protruding portion and a buckling portion. The buckling portion is located at an end of the protruding portion, and the second housing has a first surface, a second surface, and a through hole. The second surface is opposite to the first surface, and the through hole passes through the first surface and the second surface. The fastener is disposed at the second housing corresponding to the through hole. The fastener includes a first portion, at least one connecting portion, at least two elastic portions, and a second portion. The first portion movably abuts against the first surface and has a first opening. The first opening is in communication with the through hole. The connecting portion is accommodated in the through hole. One end of the connecting portion is connected to the first portion. The connecting portion is spaced apart from an inner edge of the second housing by a gap, and the fastener is movable in the through hole relative to the inner edge of the second housing to change relative positions of the fastener and the inner edge of the second housing. The two elastic portions inclinedly extend into the first opening from the first portion. The second portion movably abuts against the second surface and is disposed at another end of the connecting portion. The second portion and the first portion are jointly clamped on the second housing. During assembling of the first housing to the second housing, the buckling portion pushes the fastener to move along the gap, the first opening is aligned to the buckling portion, the buckling portion is allowed to pass through the elastic portions, and after the buckling portion passes through the elastic portions, the elastic portions return and are clamped on the protruding portion.

In an unclaimed embodiment, the connecting portion and the second portion may be integrally formed.

According to the invention, the another end of the connecting portion is a hook portion, and the second portion further has a second opening. The hook portion is adapted for being hooked to an inner edge of the second portion through the second opening.

According to the invention, the second portion further includes at least one groove located at the second opening, and the hook portion is hooked to the second portion through the groove.

In an embodiment, the first portion and the second portion are made of different materials.

In an embodiment, the second housing further has a guide groove. The guide groove is in communication with the through hole and is adapted for allowing the at least one connecting portion to laterally access the through hole, and the first portion and the second portion are jointly clamped on the second housing.

The present disclosure further provides a housing device, according to claim 4. The housing device includes a first housing, a second housing, and a fastener. The first housing is provided with a protruding portion and a buckling portion. The buckling portion is located at an end of the protruding portion. The second housing has a first surface, a second surface, and a through hole. The second surface is opposite to the first surface, and the through hole passes through the first surface and the second surface. The fastener is disposed at the second housing corresponding to the through hole. The fastener includes a first portion, at least one connecting portion, at least two elastic portions, and a second portion. The first portion movably abuts against the first surface and has a first opening. The first opening is in communication with the through hole. The connecting portion and is accommodated in the through hole, and one end of the connecting portion is connected to the first portion. The connecting portion is spaced apart from an inner edge of the second housing by a gap, and the fastener is movable in the through hole relative to the inner edge of the second housing to change relative positions of the fastener and the inner edge of the second housing. The two elastic portions inclinedly extend into the first opening from the first portion. The second portion movably abuts against the second surface and is disposed at the another end of the connecting portion. The second portion and the first portion are jointly clamped on the second housing. During assembling of the first housing to the second housing, the buckling portion pushes the fastener to move along the gap, the first opening is aligned to the buckling portion, the buckling portion is allowed to pass through the elastic portions, and after the buckling portion passes through the elastic portions, the elastic portions return and are clamped on the protruding portion.

According to the fastener and the housing device including the fastener of the present disclosure, since the connecting portion is spaced apart from the inner edge of the second housing by a gap, a position of the fastener relative to the second housing may be slightly adjusted during assembling to be aligned to a position of the buckling portion on the first housing during assembling, thereby resolving a problem that the buckling portion of the housing cannot be aligned to the fastener as a result of a deviated position.

### BRIEF DESCRIPTION OF THE DRAWINGS

FIG. 1A is a three-dimensional schematic view showing a fastener and a fixing member according to a not claimed embodiment of the present disclosure.
FIG. 1B is a three-dimensional cross-sectional view of the fastener shown in FIG. 1A along a direction.
FIG. 1C is a three-dimensional cross-sectional view of the fastener shown in FIG. 1A along another direction.
FIG. 2A is a three-dimensional schematic view showing a process of assembling the fastener in FIG. 1A to a second housing.
FIG. 2B is a cross-sectional view showing a process of assembling a housing device according to a not claimed embodiment of the present disclosure.
FIG. 2C is a cross-sectional view showing a process of assembling a housing device according to a not claimed embodiment of the present disclosure.
FIG. 3A is a three-dimensional schematic view showing a fastener according to another embodiment of the present disclosure.
FIG. 3B is a schematic cross-sectional view showing the fastener according to the another embodiment of the present disclosure assembled to the second housing.

### DETAILED DESCRIPTION OF THE INVENTION

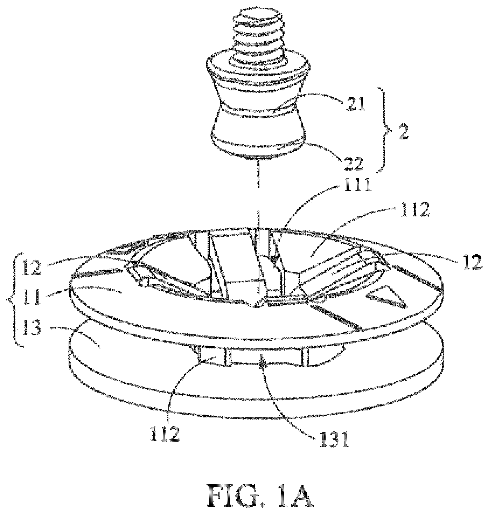

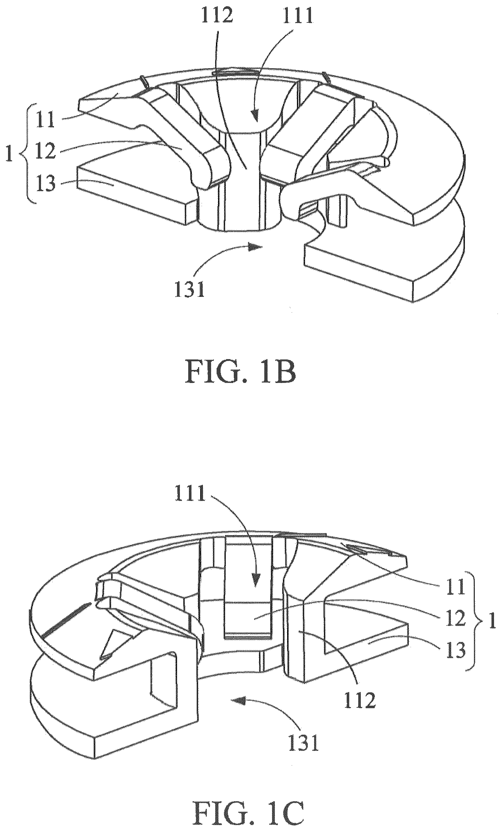

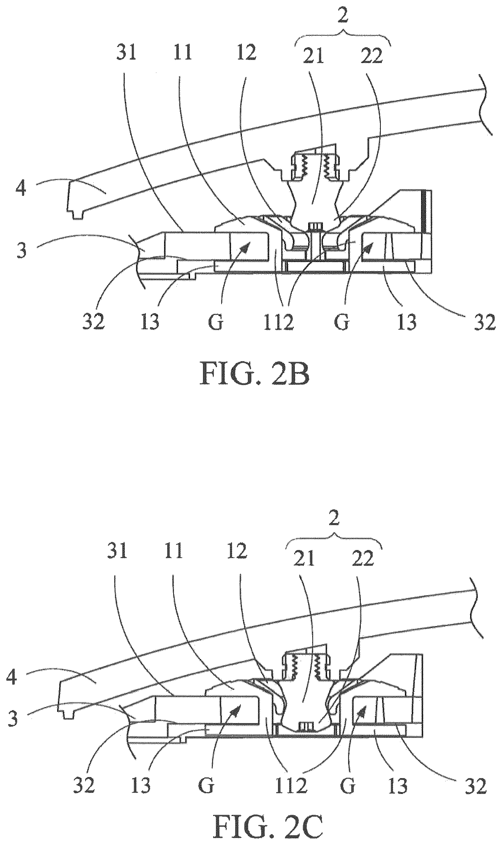

As shown in FIG. 1A to FIG. 1C, the fastener 1 includes a first portion 11, at least one connecting portion 112, two elastic portions 12, and a second portion 13. In this embodiment, the amount of the connecting portion 112 is four, but not limited to. In other embodiments, the amount of the connecting portion 112 may be greater than or equal to 1. The first housing 4 as shown in FIG. 2B includes a fixing 2. The fixing member 2 includes a protruding portion 21 and a buckling portion 22. That is, the first housing 4 is provided with the protruding portion 21 and the buckling portion 22. The buckling portion 22 is located at an end of the protruding portion 21. FIG. 1B and FIG. 1C are three-dimensional cross-sectional views of the fastener 1 shown in FIG. 1A in different directions, which are intended to facilitate understanding of a three-dimensional structure of the fastener 1 shown in FIG. 1A.

The first portion 11 may be a circular plate shape. A first opening 111 is provided at a central position of the first portion 11, and the first opening 111 may be a circular opening. The four connecting portions 112 are symmetrically disposed at an inner edge of the first portion 11 and extend toward the second portion 13. One end of each of the connecting portions 112 is connected to the first portion 11, and another end is disposed at the second portion 13. The second portion 13 may also be a circular plate shape. The second portion 13 further includes a second opening 131. The second opening 131 is provided at a central position of the second portion 13, the second opening 131 may be a circular opening, and the first opening 111 is in communication with the second opening 131.

The two elastic portions 12 are symmetrically disposed at the inner edge of the first portion 11 and inclinedly extend into the first opening. In other words, the two elastic portions 12 and the four connecting portions 112 are disposed around the first opening 111. In this unclaimed embodiment, the first portion 11, the connecting portion 112, the elastic portion 12, and the second portion 13 are integrally formed and may be made of the same material.

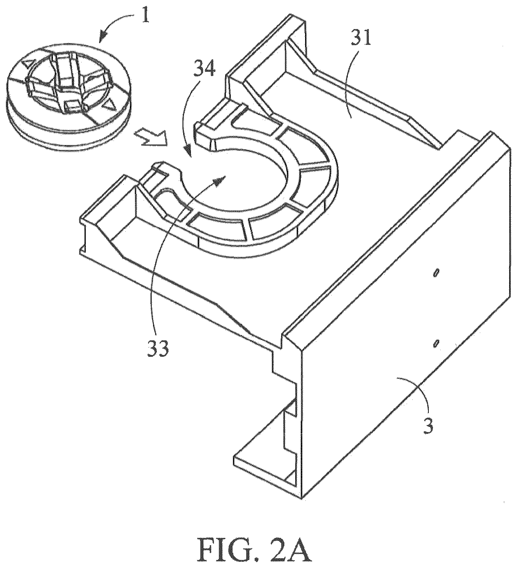

Referring to FIG. 2A to FIG. 2C, in this embodiment, the housing device includes a first housing 4, a second housing 3, and a fastener 1. The fastener 1 is assembled to the second housing 3, and the fixing member 2 is screwed to the first housing 4. In other embodiments, the fixing member 2 may be integrally formed with the first housing 4. The second housing 3 has a first surface 31 facing the first housing 4, a second surface 32 opposite to the first surface 31, a through hole 33 passing through the first surface 31 and the second surface 32, and a guide groove 34 in communication with the through hole 33. The fastener 1 is disposed at the second housing 3 corresponding to the through hole 33, the first portion 11 movably abuts against the first surface 31, and the first opening 111 in communication with the through hole 33. The connecting portion 112 is accommodated in the through hole 33, and the connecting portion 112 is spaced apart from an inner edge of the second housing 3 by a gap G, so that the fastener is movable in the through hole 33 relative to the inner edge of the second housing 3 to change relative positions of the fastener 1 and the inner edge of the second housing 3. The second portion 13 movably abuts against the second surface 32 to be jointly clamped on the second housing 3 with the first portion 11.

During assembling, the fastener 1 accesses the guide groove 34 along an arrow direction in FIG. 2A. The guide groove 34 is adapted for allowing at least one connecting portion 112 to laterally access the through hole 33, so that the through hole 33 is in communication with the first opening 111 and the second opening 131. The first portion 11 of the fastener 1 is in contact with the first surface 31, and the second portion 13 is in contact with the second surface 32, that is, the first portion 11 and the second portion 13 are jointly clamped on the second housing 3. The connecting portion 112 passes through the through hole 33 and is spaced apart from an inner edge of the through hole 33 by a gap G. The design of the structure enables the fastener 1 to move relative to the inner edge of the through hole 33 to change the relative positions of the fastener 1 and the through hole 33, and enables the buckling portion 22 to be aligned to a center of the first opening 111.

During assembling of the first housing 4 to the second housing 3, the buckling portion 22 pushes the fastener 1 to move along the gap G. The first opening 111 is aligned to the buckling portion 22, and the buckling portion 22 is allowed to pass through the elastic portions 12. After the buckling portion 22 passes through the elastic portions 12, the elastic portions return and are clamped on the protruding portion 21. Specifically, during assembling of the first housing 4 to the second housing 3, as shown in FIG. 2B, the fixing member 2 screwed to the first housing 4 moves toward the first opening 111. After contacting the elastic portion 12 that is inclinedly disposed, the buckling portion 22 starts to push the elastic portion 12 outward. In this case, the elastic portion 12 is slightly elastically deformed, so that the buckling portion 22 can pass. After the buckling portion 22 passes through the elastic portions, as shown in FIG. 2C, the elastic portions 12 return and are clamped on the protruding portion 21 whose width is less than that of the buckling portion 22. By the above-mentioned cooperation between the fastener 1 and the fixing member 2, the first housing 4 can be assembled to the second housing 3.

Since the fastener 1 can be moved in a small range in the through hole 33 relative to the second housing 3, and the elastic portion 12 is designed to be oblique, a problem of position deviation of the first housing 4 or the second housing 3 as a result of factors such as a temperature can be resolved. Specifically, when the fixing member 2 passes through the first opening 111 and the buckling portion 22 pushes the elastic portion 12, if the buckling portion 22 is not aligned to a central axis of the fastener 1, forces applied to the two elastic portions 12 are different. In this case, horizontal components of the two different forces cause the fastener 1 to move horizontally relative to the second housing 3 within a range of the gap G until the fixing portion 2 is aligned to the central axis of the fastener 1. After the fixing member 2 is aligned to the central axis of the fastener 1, the forces applied to the two elastic portions 12 are substantially equal, and the fastener 1 stops moving. By virtue of the design, the fastener 1 can be automatically aligned to the fixing member 2, resolving the problem of position deviation of the fixing member 2 of the first housing 4.

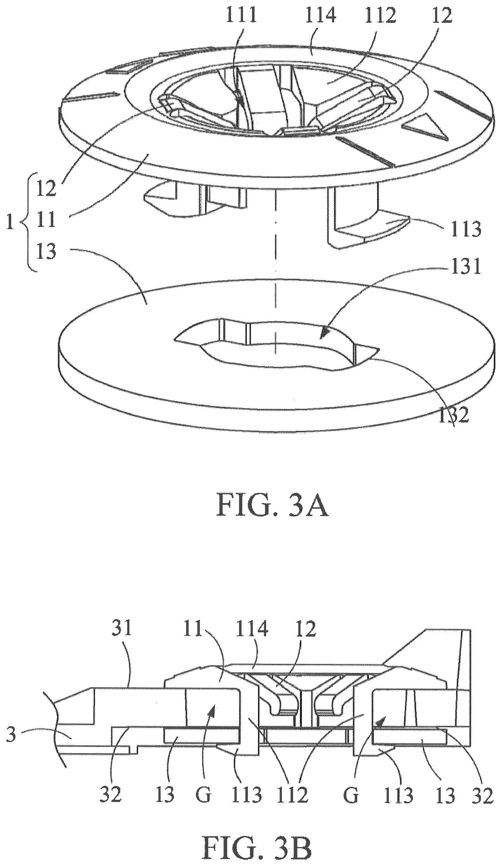

In an embodiment according to the invention, the another end of the connecting portion 112 is a hook portion 113. The hook portion 113 is adapted for being hooked to the inner edge of the second portion 13 through the second opening 131. The second portion 13 further includes at least one groove 132 located at the inner edge of the second opening 131. The hook portion 113 is hooked to the second portion 13 through the groove 132. Specifically, referring to FIG. 3A and FIG. 3B, in this embodiment of the present disclosure, the two connecting portions 112 and the second portion 13 are not integrally formed, and the two connecting portions 112 are hooked to an inner edge of the second opening 131 by using the hook portion 113. Two grooves 132 formed at the inner edge of the second opening 131 are disposed corresponding to the positions of the two hook portions 113, respectively. The two hook portions 113 are respectively hooked to the second portion 13 in the corresponding grooves 132, and the hook portion 113 is limited in the grooves 132 to prevent the hook portion 113 from rotating relative to the inner edge of the second opening 131, so that the first portion 11 is more stably connected to the second portion 13.

In addition, an inner edge of the first portion 11 adjacent to the first opening 111 has an inclined surface 114 located on upper edges of the connecting portion 112 and the elastic portion 12, and is adapted for guiding the buckling portion 22 to be aligned to a central of the first opening 111 when the buckling portion 22 is adapted for passing through the first opening 111. During assembling of the first housing 4 to the second housing 3, if the buckling portion 22 of the fixing member 2 is in contact with the inclined surface 114 located at the inner edge of the first opening 111, a horizontal component of a force between the buckling portion 22 and the inclined surface 114 causes the fastener 1 to horizontally move relative to the second housing 3 within the range of the gap G, so that the buckling portion 22 is aligned to the center of the first opening 111, further improving assembling quality of the housings.

In this embodiment, the connecting portion 112 and the second portion 13 may be made of different materials due to being not integrally formed but being different components. Those skilled in the art may adopt different materials for the first portion 11 and the second portion 13 based on actual application conditions such as different friction coefficients, different mechanical strengths, and the like. In addition, the second housing 3 may alternatively be not provided with the guide groove 34 to improve strength of the second housing 3. If the guide groove 34 is not provided, during assembling, the second portion 13 may be first disposed on the second surface 32 of the second housing 3, then the first portion 11 is disposed on the first surface 31, and after the connecting portion 112 passes through the through hole 33, the hook portion 113 is hooked to the groove 132 at the inner edge of the second opening 131 to dispose the fastener 1 in the through hole 33 of the second housing 3.

Based on the above, although the present disclosure is disclosed above, by using embodiments, the embodiments are not intended to limit the present disclosure. Those with ordinary knowledge in the art to which the present disclosure belongs can make various changes and refinements without departing from the scope of the present disclosure. Therefore, the protection scope of the present disclosure shall be subject to scope defined by the attached claims.

## Claims

1. A fastener (1), comprising:
a first portion (11) comprising a first opening (111) and an inclined surface (114);
at least one connecting portion (112) located at the first opening (111), wherein one end of the at least one connecting portion (112) is connected to the first portion (11);
at least two elastic portions (12) inclinedly extending into the first opening (111) from the first portion (11), wherein the inclined surface (114) is located on upper edges of the connecting portion (112) and the elastic portion (12), and the inclined surface (114) is a continuous surface and is exactly located at the inner edge of the first opening (111); and
a second portion (13) disposed at another end of the at least one connecting portion (112),
wherein the another end of the connecting portion (112) is a hook portion (113), the second portion (13) further comprises a second opening (131), the second opening (131) is in communication with the first opening (111), and the hook portion (113) is adapted for being hooked to an inner edge of the second portion (13) through the second opening (131);
wherein the second portion (13) further comprises at least one groove (132) located at the second opening (131), and the hook portion (113) is hooked to the second portion (13) through the groove (132).

2. The fastener (1) according to claim 1, wherein the first portion (11) and the second portion (13) are made of different materials.

3. A housing device, comprising:
a first housing (4) provided with a protruding portion (21) and a buckling portion (22), wherein the buckling portion (22) is located at an end of the protruding portion (21);
a second housing (3) having a first surface, a second surface, and a through hole, wherein the second surface is opposite to the first surface, and the through hole passes through the first surface and the second surface; and
the fastener (1) according to one of claims 1 to 2 disposed at the second housing (3) corresponding to the through hole.

## Patentansprüche

1. Eine Befestigungseinrichtung (1), die folgende Merkmale aufweist:
einen ersten Abschnitt (11), der eine erste Öffnung (111) und eine geneigte Oberfläche (114) aufweist;
zumindest einen Verbindungsabschnitt (112), der sich an der ersten Öffnung (111) befindet, wobei ein Ende des zumindest einen Verbindungsabschnitts (112) mit dem ersten Abschnitt (11) verbunden ist;
zumindest zwei elastische Abschnitte (12), die sich von dem ersten Abschnitt (11) auf geneigte Weise in die erste Öffnung (111) erstrecken, wobei sich die geneigte Oberfläche (114) an oberen Rändern des Verbindungsabschnitts (112) und des elastischen Abschnitts (12) befindet und die geneigte Oberfläche (114) eine durchgehende Oberfläche ist und sich genau an dem inneren Rand der ersten Öffnung (111) befindet; und
einen zweiten Abschnitt (13), der an einem anderen Ende des zumindest einen Verbindungsabschnitts (112) angeordnet ist,
wobei das andere Ende des Verbindungsabschnitts (112) ein Hakenabschnitt (113) ist, der zweite Abschnitt (13) ferner eine zweite Öffnung (131) aufweist, die zweite Öffnung (131) mit der ersten Öffnung (111) in Verbindung steht und der Hakenabschnitt (113) dazu angepasst ist, durch die zweite Öffnung (131) an einem inneren Rand des zweiten Abschnitts (13) angehakt zu werden;
wobei der zweite Abschnitt (13) ferner zumindest eine Nut (132) aufweist, die sich an der zweiten Öffnung (131) befindet, und der Hakenabschnitt (113) durch die Nut (132) an dem zweiten Abschnitt (13) angehakt ist.

2. Die Befestigungseinrichtung (1) gemäß Anspruch 1, wobei der erste Abschnitt (11) und der zweite Abschnitt (13) aus unterschiedlichen Materialien hergestellt sind.

3. Eine Gehäusevorrichtung, die folgende Merkmale aufweist:
ein erstes Gehäuse (4), das mit einem vorstehenden Abschnitt (21) und einem Knickabschnitt (22) versehen ist, wobei sich der Knickabschnitt (22) an einem Ende des vorstehenden Abschnitts (21) befindet;
ein zweites Gehäuse (3) mit einer ersten Oberfläche, einer zweiten Oberfläche und einem Durchgangsloch, wobei die zweite Oberfläche der ersten Oberfläche gegenüberliegt und das Durchgangsloch durch die erste Oberfläche und die zweite Oberfläche verläuft; und
die Befestigungseinrichtung (1) gemäß einem der Ansprüche 1 bis 2, die an dem zweiten Gehäuse (3) entsprechend dem Durchgangsloch angeordnet ist.

## Revendications

1. Dispositif de fixation (1), comprenant :
une première partie (11) comprenant une première ouverture (111) et une surface inclinée (114) ;
au moins une partie de raccordement (112) située au niveau de la première ouverture (111), dans lequel une extrémité de l'au moins une partie de raccordement (112) est reliée à la première partie (11) ;
au moins deux parties élastiques (12) s'étendant en pente dans la première ouverture (111) depuis la première partie (11), dans lequel la surface inclinée (114) est située sur des bords supérieurs de la partie de raccordement (112) et de la partie élastique (12), et la surface inclinée (114) est une surface continue et est située exactement au niveau du bord intérieur de la première ouverture (111) ; et
une deuxième partie (13) disposée au niveau d'une autre extrémité de l'au moins une partie de raccordement (112),
dans lequel l'autre extrémité de la partie de raccordement (112) est une partie en crochet (113), la deuxième partie (13) comprend en outre une deuxième ouverture (131), la deuxième ouverture (131) est en communication avec la première ouverture (111), et la partie en crochet (113) est adaptée pour être accrochée à un bord intérieur de la deuxième partie (13) à travers la deuxième ouverture (131) ;
dans lequel la deuxième partie (13) comprend en outre au moins une rainure (132) située au niveau de la deuxième ouverture (131), et la partie en crochet (113) est accrochée à la deuxième partie (13) à travers la rainure (132).

2. Dispositif de fixation (1) selon la revendication 1, dans lequel la première partie (11) et la deuxième partie (13) sont fabriquées dans des matériaux différents.

3. Dispositif de boîtier, comprenant :
un premier boîtier (4) muni d'une partie en saillie (21) et d'une partie de flambage (22), dans lequel la partie de flambage (22) est située au niveau d'une extrémité de la partie en saillie (21) ;
un deuxième boîtier (3) présentant une première surface, une deuxième surface et un trou traversant, dans lequel la deuxième surface est à l'opposée de la première surface et le trou traversant traverse la première surface et la deuxième surface ; et
dispositif de fixation (1) selon l'une des revendications 1 à 2, disposé au niveau du deuxième boîtier (3) correspondant au trou traversant.
